(19) **Europäisches Patentamt**

**European Patent Office**

**Office européen des brevets**

(11) **EP 0 978 667 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.$^7$: **F16H 49/00**, F16H 55/08

(21) Anmeldenummer: **99114904.8**

(22) Anmeldetag: **04.08.1999**

(54) **Wellgetriebe und Verfahren zu dessen Zahnoptimierung**

Harmonic drive and procedure for the optimisation of tooth profiles thereof

Transmission harmonique ainsi que méthode d'optimisation de son profil denté

(84) Benannte Vertragsstaaten:
**AT BE CH CY DE DK ES FI FR GB GR IE IT LI LU MC NL PT SE**

(30) Priorität: **06.08.1998 DE 19835571**

(43) Veröffentlichungstag der Anmeldung:
**09.02.2000 Patentblatt 2000/06**

(73) Patentinhaber: **IMS Gear GmbH**
**79871 Eisenbach (DE)**

(72) Erfinder: **Grill, Joachim, Dr.**
**71149 Bondorf (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**EP-A- 0 640 778**　　　**EP-A- 0 767 325**
**EP-B- 0 514 829**　　　**US-A- 3 747 434**

- **MOTYKA ST: "VERKUERZTE BAUFORM DES HARMONIC DRIVE. \GETRIEBETECHNIK, ANTRIEBSTECHNIK" , KONSTRUKTION,DE,SPRINGER-VERLAG. BERLIN, VOL. 45, NR. 7 / 08, PAGE(S) 221-226 XP000195233 * Abbildung 9C ***

**Beschreibung**

Die Erfindung betrifft ein Wellgetriebe mit den Merkmalen des Oberbegriffs des Anspruchs 1.

Ein solches Wellgetriebe ist z.B. aus EP 0 514 829 A1 bekannt.

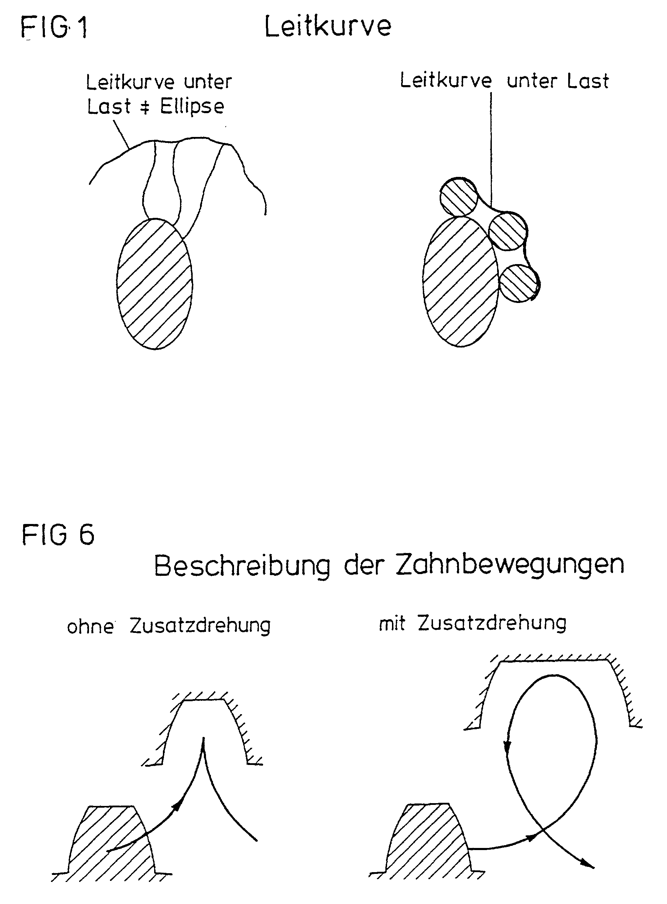

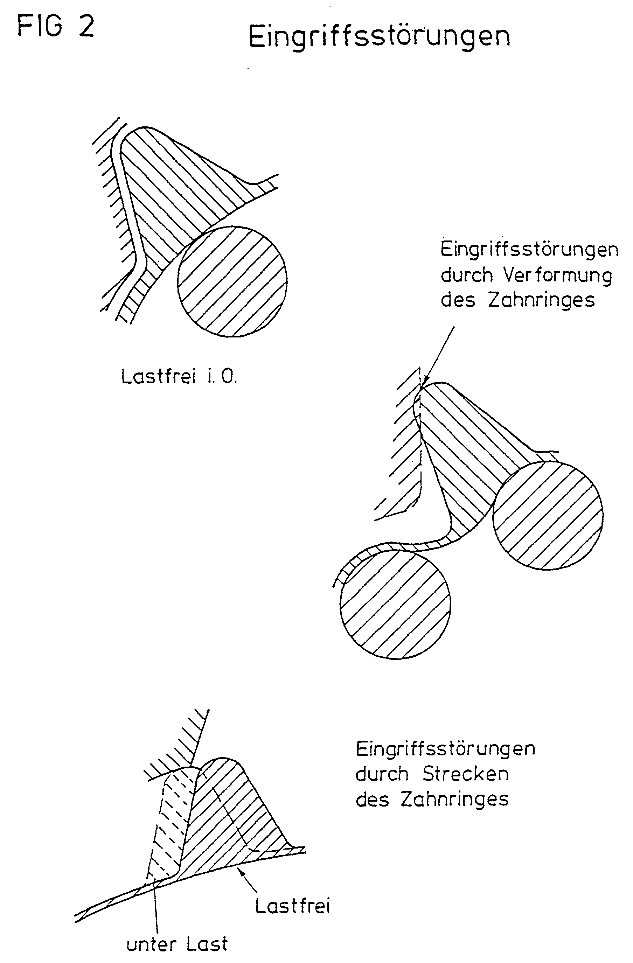

Alle Wellgetriebe bestehen aus einem verformbaren Zahnkranz. Dieser kann aus Metall oder auch aus Kunststoff hergestellt werden. Für die Beschreibung der Form des verformten Zahnkranzes wird eine Leitkurve verwendet (z.B. bei Harmonic Drive eine Ellipse) (s. Figur 1) Werden die Verformungen unter Last nicht berücksichtigt oder bei einem zu groben Modell entstehen Eingriffsstörungen, welche sich negativ auf den Wirkungsgrad und die Lebensdauer auswirken. (s. Figur 2).

Die Verformungen können in radialer Richtung stattfinden, beispielsweise zwischen den einzelnen Rollen oder Stegen, oder die Verformungen können in tangentialer Richtung des Zahnkranzes stattfinden, wenn der Zahnkranz unter den zu übertragenden Momenten in Längsrichtung gedehnt wird. Werden diese Verformungen nicht berücksichtigt, kommt es zu Kopfeingriffsstörungen, einem erhöhten Zahnflankenverschleiß und durch die Verformung des Zahnkopfes in radialer Richtung zu Beschädigungen am Zahnkopf und einem schlechteren Verzahnungswirkungsgrad. Der Verzahnungswirkungsgrad hat bekanntlich bei hochuntersetzenden Umlaufrädergetrieben und auch bei den Wellgetrieben einen sehr großen Einfluß auf den Wirkungsgrad.

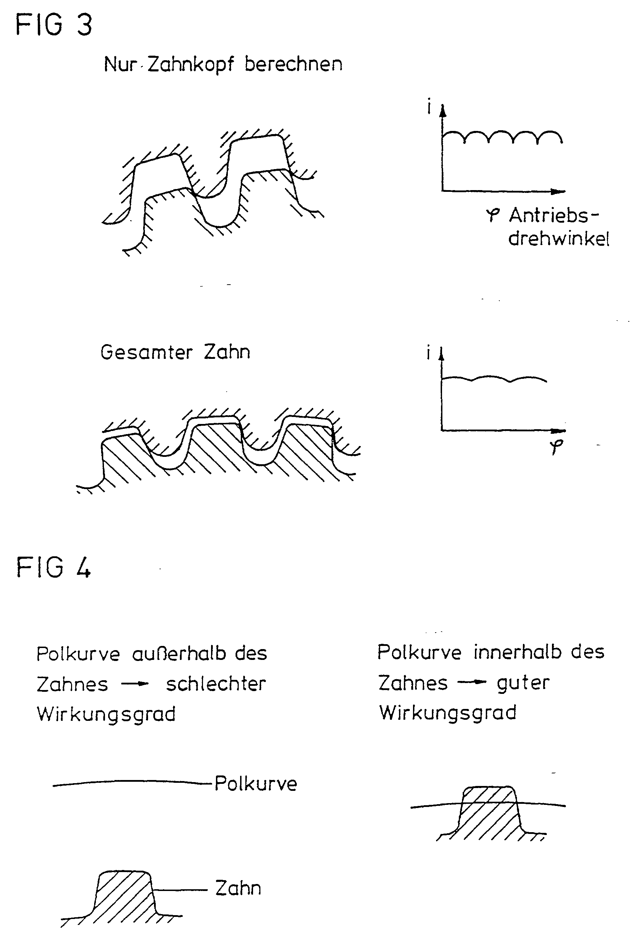

Ein wesentlicher Vorteil des neuen Ansatzes ist es, daß alle Zahnradprofile und gesamten Zahnflanken (Fuß, aktive Flanke und Kopfflanke) mit ihren Gegenflanken berechnet werden. Wird wie bei den HD (Harmonic Drive)-Patenten nur die Zahnform im Doppeleingriff, also der Zahnkopf optimiert, so kommt es auf der aktiven Flanke zu einem nicht konstanten Übersetzungsverlauf und damit zu Drehwinkelabweichungen. Werden die Flanken mit dem räumlichen Verzahnungsgesetz bestimmt, werden diese Fehler minimiert. Durch eine optimale Zahnfußform wird zusätzlich die Zahnfußfestigkeit und die Überdeckung optimiert, wodurch sich eine erhöhte Leistungsdichte des Getriebes ergibt. (Figur 3)

Weitere Vorteile sind, daß durch den räumlichen Ansatz Einbaufehler und Verkippungen der Antriebs- und Abtriebswellen unter Last simuliert werden. Ferner werden mit diesem Ansatz nicht nur die Koordinaten der Gegenflanke sondern auch die ersten Ableitungen, d.h. die Normale und die Krümmungen der räumlichen Zahnflanken und die Hauptkrümmungsrichtungen berechnet. Die Kenntnis der Normalen ist unter anderem Voraussetzung für das Vermessen der Flanken auf eine 3D Meßmaschine, da der Taster senkrecht zur Zahnflanke anfahren muß. Die Kenntnis der Hauptkrümmungsrichtungen und der Krümmungen wird benötigt für die Festigkeitsberechnung der Flanken. Die für die Auslegung der Getriebe benötigte Nachrechnung auf Flankentragfähigkeiten müssen die auftretenden Flankenpressungen mit Hilfe der Theorie von Hertz berechnet werden. Die üblichen Formeln nach DIN3990 oder ähnliche Berechnungsansätze gelten nur für Evolventenverzahnungen und können bei den hier auftretenden nicht -evolventischen Verzahnungen nicht verwendet werden.

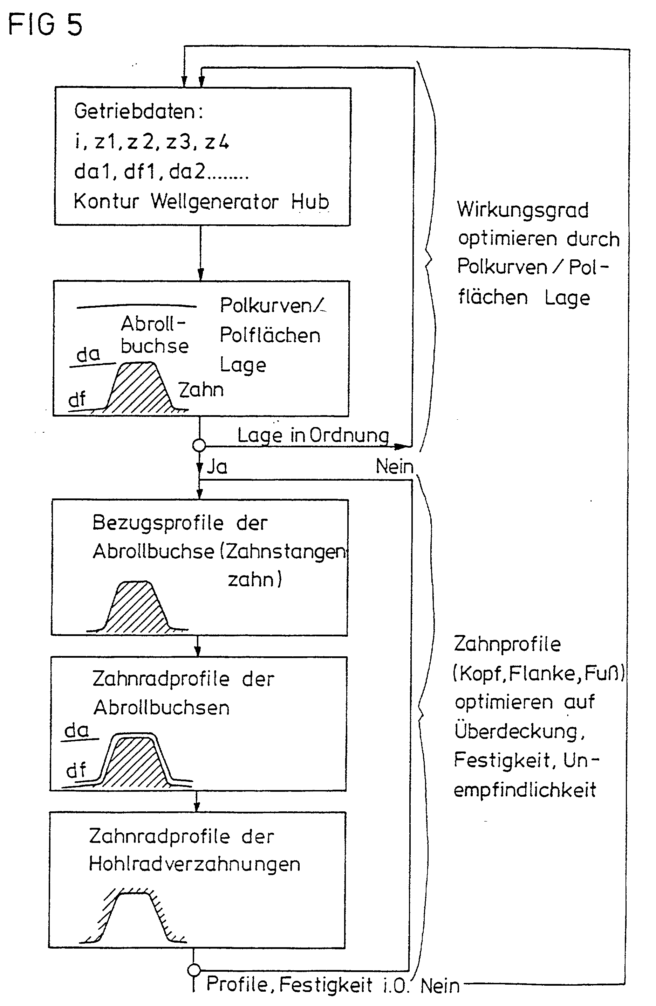

Ein weiterer Vorteil dieses Ansatzes ist die Berechnung der Polkurven in einer ebenen Beschreibung und der räumlichen Axoide welche nach Reuleaux die Bewegung durch ein Abschroten erzeugen. Die Polkurven und die Axoide werden aus dem Bewegungswinder, d.h. aus den Geschwindigkeiten berechnet. Kennt man die Geschwindigkeiten und Beschleunigungen nicht, können die Verzahnungen nicht hinsichtlich Wirkungsgrad optimiert werden. Im Falle der Abrollbuchse wird durch die Optimierung des Hubes des Wellgenerators, durch die Form des Wellgenerators und durch die Wahl der Zähnezahlen die Lage der Axoide bzw. Polkurven deutlich verbessert. (Figur 4 und Figur 5)

Bei einer Optimierung mit Hilfe eines Rechenprogrammes wird die Verzahnung iterativ am Figurschirm durch das Verschieben der Polkurven bzw. Axoide rasch optimiert.

Deutlich erkennbar wird dieser Vorteil, wenn als Beispiel eine Verzahnung zwischen Abrollbuchse und Abtrieb mit gleichen Zähnezahlen betrachtet wird, wie dies beispielsweise in den Patenten (HD) für die Flachvariante beschrieben wird. Es ist sofort ersichtlich, daß bei einer Übersetzung 1:1 die Polkurven weit außerhalb der Verzahnung liegen (Figur 4), d.h. es tritt sehr hohes Gleiten auf. Durch eine Optimierung der Abmessungen wird die Polkurve gezielt in den Bereich der Verzahnung gelegt. Der Verzahnungswirkungsgrad wird damit um ca. 1% verbessert. Je nach Untersetzungsverhältnis hat dies aber gravierende Auswirkungen auf den Gesamtwirkungsgrad des Getriebes. Dieser kann sich bei Untersetzungen von >200 bei einer Verbesserung um 1% im Verzahnungswirkungsgrad der Gesamtwirkungsgrad mehr als verdoppeln!.

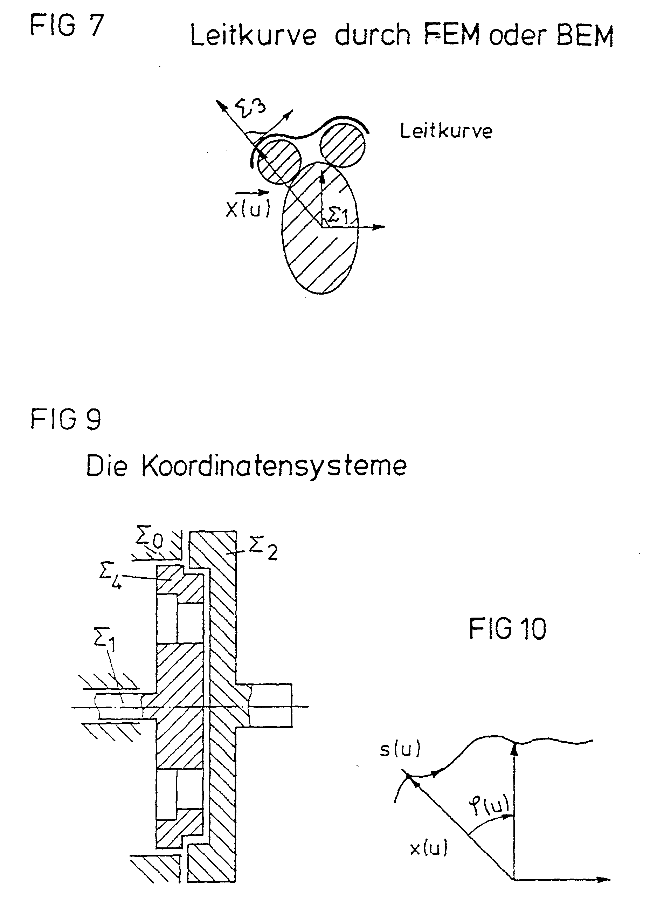

Ein weiterer Vorteil der neuen Methode ist, daß die zwischen Wellgenerator und Abrollbuchse entstehende Zusatzbewegung durch die unterschiedlichen Zähnezahlen berücksichtigt wird. Deutlich sichtbar sind die Unterschiede beim 1:1 Abtrieb in der Flachvariante (Figur6). Wird diese Zusatzbewegung nicht berücksichtigt, so ist die Zahnlücke im Hohlrad zu klein. Wird hingegen diese Zusatzbewegung berücksichtigt, so erhält man die Bewegung des Abrollzahnes in der Hohlradlücke. Deutlich sichtbar in Figur ist, daß die Zahnlücke wesentlich größer sein muß.

Zur Verbesserung des Wirkungsgrades und der Lebensdauer sowie zur optimalen Auslegung der auftretenden Zahnradpaarungen im Leerlauf und unter Last wird folgende Methode angemeldet. (Figur 5)

Die Leitkurve kann beliebig sein, die genaue Kontur unter Last kann z.B. mit Hilfe der FEM oder BEM-Methoden ermittelt werden. (Figur 7)

Wird die Abrollbuchse aus einem weicheren Material (z.B. Kunststoff) und das Gehäuse und der Abtrieb aus einem festeren Material (z.B. Sinterstahl, Metall) so können die Zähne der Abrollbuchse mit einer größeren Zahndicke versehen werden, als die des Gehäuses.

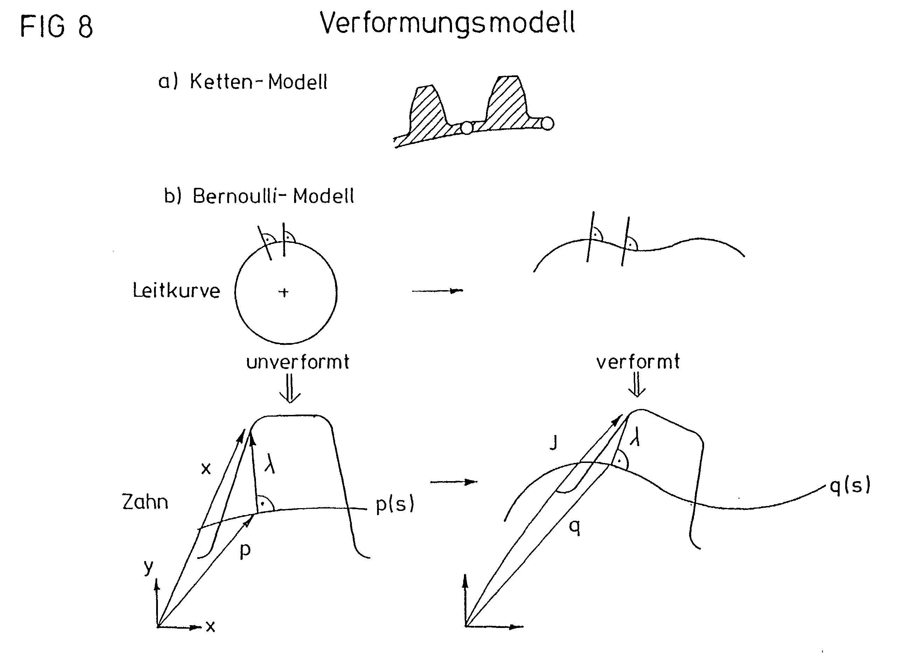

Bei der Verformung der Abrollbuchse werden dann die Zähne im wesentlichen ihre Gestalt beibehalten. (Figur 8, Verformungsmodell a)

Werden Abrollbuchse, Gehäuse und Abtrieb aus Materialien mit ähnlichen Festigkeitswerten (z.B. POM und PA) ausgeführt, oder bei entsprechenden Zähnezahlen ist die Zahndicke und die Zahnlücke der Abrollbuchse im wesentlichen gleich groß.

In diesem Fall wird mit einem verbesserten Verformungsmodell gerechnet werden. (Figur 8, Verfomrungsmodell b) Hierbei wird die Theorie des stark gekrümmten Balkens in Verbindung mit der Bernoulli-Hypothese verwendet.

Sei der Zahn in der Darstellung x(u) und die unverformte kreisförmige Abrollbuchse in der Form p(s) vorhanden. Die Bernoulli-Hypothese impliziert dann folgende Zuordnung:

$\overrightarrow{p(s)} + \lambda \overrightarrow{n(s)} = \overrightarrow{x(u)}$  $\overrightarrow{n(s)}$ = Normalenvektor des unverformten Zahnringes

$\Rightarrow F(u,s) = (\overrightarrow{p(s)} - \overrightarrow{x(u)}) * \overrightarrow{t(s)}$  $\overrightarrow{t(s)}$ = Tangentenvektor des unverformten Zahnringes

$\Rightarrow s(u)$

$$\Rightarrow \lambda(s(u)) = \frac{(\overrightarrow{x(u)} - \overrightarrow{p(s)}) * \overrightarrow{n(s)}}{\overrightarrow{n(s)}}$$

Der verformte Zahnring kann dann folgendermaßen berechnet werden:

$\overrightarrow{q(s)}$ = Neutrale Faser des verformten Zahnringes
$\overrightarrow{y(u)} = \overrightarrow{q(s(u))} \div \lambda(s(u)) \overrightarrow{n(s)}$  $\vec{n}$ = Normalenvektor der neutralenFaser, $\vec{y}$ = verformte Zahnkontur

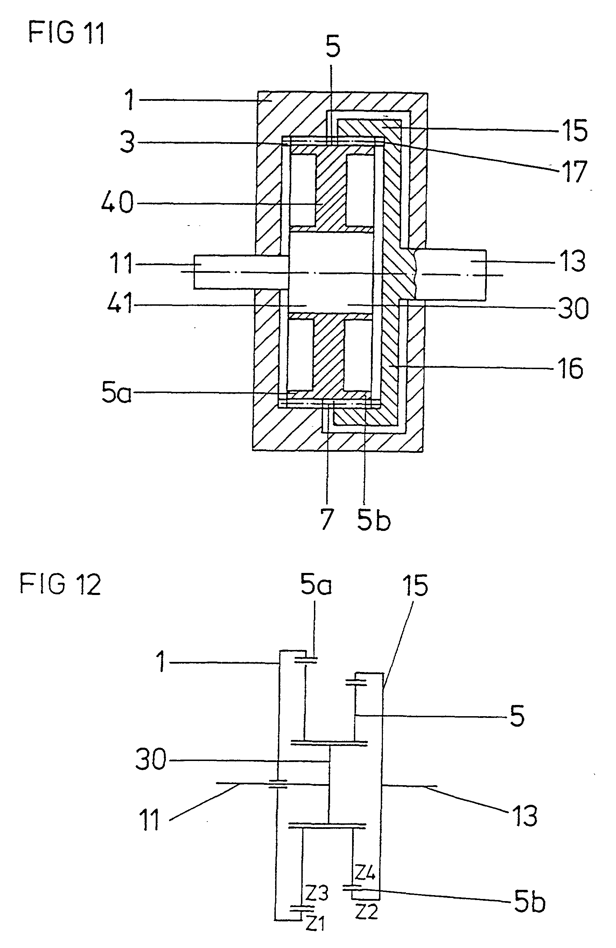

Für die mathematische Beschreibung der Bewegungen und der Zahnflanken werden mit den einzelnen Bauteilen Koordinatensysteme Σ eingeführt (Figur 9)

Σ0:    Hohlradsystem = Rastsystem
Σ1:    Antriebssystem
Σ2:    Abtriebssystem
Σ3:    Begleitendes Zweibein der Leitkurve
Σ4:    Abrollbuchsensystem

Für die Beschreibung der restlichen Bewegungsabläufe werden die Zähnezahlen benötigt:

z1    Abrollbuchse auf Hohlradseite
z2    Hohlrad
z3    Abrollbuchse auf Abtriebsseite
z4    Abtrieb

Die Zähne der Abrollbuchse werden im System System Σ 4 beschrieben, die Zähne des Hohlrades im System Σ 0 und falls eine Verzahnung im Abtrieb vorgesehen ist, werden die Zähne des Abtriebes im System Σ 2 beschrieben.

Die Leitkurve sei beschrieben durch: $\overrightarrow{x(s)}$ wobei o.B.d.A. s die Bogenlänge ist. Der Zwanglauf Σ 3/ Σ 1 besitzt die folgende Koordinatentransformationen (beschriebenin homogenen Koordinaten)

$\overrightarrow{x(s)}$ = *Leitkurve*

$$T_{31} = \begin{bmatrix} T & \overrightarrow{\cdot t} \\ 0 & 1 \end{bmatrix}$$

Koordinatentransformation in homogenen Koordinaten
$T = (\vec{t}, \vec{h}, \vec{b})$ $\vec{t}$ = Tangentenvekto*r*, $\vec{n}$ = Normalenvektor, $\vec{b}$ = Binormalenvekto*r*
$\overrightarrow{x_s} = \vec{t}, \kappa = K$rümmung der Leitkurve, τ = Torsion der Leitkurve
$b = (\vec{\omega}, \vec{v}) = (\tau\vec{t} + \kappa\vec{b}, \vec{t})b$ = Bewegungswinder
$b_s = (\tau_s\vec{t} + \kappa_s\vec{b}, \kappa\vec{n})b_s$ = Beschleunigungswinder
$\vec{x} = T_{31}\vec{x}$

Mit der obigen Transformationsvorschrift wird die Bewegung des Zahnringes relativ zum Antriebssystem beschrieben. Mit Hilfe des Bewegungswinders und des Beschleunigungswinders werden die Geschwindigkeiten und Beschleunigungen berechnet. Durch den allgemeinen Ansatz mit Hilfe der Frenetschen Ableitungsgleichungen und den Methoden der kinematischen Differentialgeometrie können so beliebige Konturen der Leitkurve beschrieben werden.

Durch die unterschiedlichen Zähnezahlen zwischen der Abrollbuchse und dem Hohlrad bzw. dem Abtrieb ergeben sich die folgende Zwangläufe:

Σ 1/Σ 2: Drehung um die z-Achse mit dem Übersetzungsverhältnis

$$i_{12} = \frac{z1 * z4}{z1 * z4 - z2 * z3}$$

Σ 4/Σ 3: Drehung um die z-Achse mit dem Übersetzungsverhältnis

$$i_{43} = \frac{z1}{z1 - z2}$$

Σ1/Σ0: Drehung um die z.Achse mit der Antriebswinkelgeschwindigkeit $\omega_{10}$

Damit ein korrekter Eingriff stattfindet, muß die Verzahnung auf der Hohlradseite ein Hüllflächenpaar des Zwanglaufes Σ 4/Σ 0 und die Verzahnung auf der Abtriebsseite ein Hüllflächenpaar des Zwanglaufes Σ 4/ Σ 1 sein.

Die Zwangläufe ergeben sich durch Hintereinanderausführung:

$$\sum 4/\sum 0 = \sum 4/\sum 3 + \sum 3/\sum 1 + \sum 1/\sum 0$$

$$\sum 4/\sum 2 = \sum 4/\sum 0 + \sum 0/\sum 1 + \sum 1/\sum 2$$

Bei Hintereinanderausführungen von Zwangläufen werden die entsprechenden Bewegungswinder addiert und in das jeweilige System transformiert.

Eine Besonderheit liegt in der Beschreibung des Zahnes in einem Abrollbuchsensystem. Dadurch können die durch die unterschiedlichen Zähnezahlen in den Eingriffen Abrollbuchse/Hohlrad und Abrollbuchse/Abtrieb wie oben beschrieben werden (diese Zusatzbewegung wird bei den Patenten ... nicht berücksichtigt)

Die Beschreibung der Zwangläufe der unter Last verformten Abrollbuchsen kann nur noch mit Hilfe eines Rechenprogrammes erfolgen, welches die Hintereinanderausführung durchführt und zum Schluß zu jedem Zeitpunkt aus den Übersetzungen und den Verformungen der Leitkurve die Koordinatentransformation, die Geschwindigkeiten, Beschleunigungen und die Polkurven und Axoide berechnet.

Für die Berechnung der Zahnradpaarungen wird zweckmäßigerweise eine Verzahnung vorgegeben und die zweite mit Hilfe der oben beschriebenen Zwangläufe und dem räumlichen Verzahnungsgesetz berechnet. Aus den Geschwindigkeiten und Beschleunigung und dem räumlichen Verzahnungsgesetz werden die Koordinaten, die ersten Ableitungen, der Normalenvektor und die Krümmungen mit den zweiten Fundamentalformen der Verzahnungen ermittelt.

Bei der Beschreibung des Zwanglaufes $\sum 3/\sum 1$ wird als Parameter die Bogenlänge s der Leitkurve verwendet während der Abtriebswinkel sich berechnet aus:

$$\varphi_{an} = \bar{\omega}_{an} * t = \text{Antriebswinkelgeschwindigkeit}$$

Die beiden Zwangläufe müssen auf den gleichen Parameter bezogen sein, wobei z.B. die Zeit t gewählt werden kann. Für jede Leitkurve muß der Zusammenhang $s(\varphi)$ mit Figur 10 ermittelt werden.

Bei komplexen Leitkurven wie sie unter Last auftreten, kann dies auch durch Berechnung von Stützpunkten und Approximation der Funktion $s(\varphi)$ geschehen. Bei der Umparametrisierung werden dann die Ableitungen mit dem Hauptsatz über implizite Funktionen ermittelt und die Bewegungswinder mit Hilfe der Kettenregel ermittelt.

$$b(s(\varphi)) = b(s) * ds/d\varphi.$$

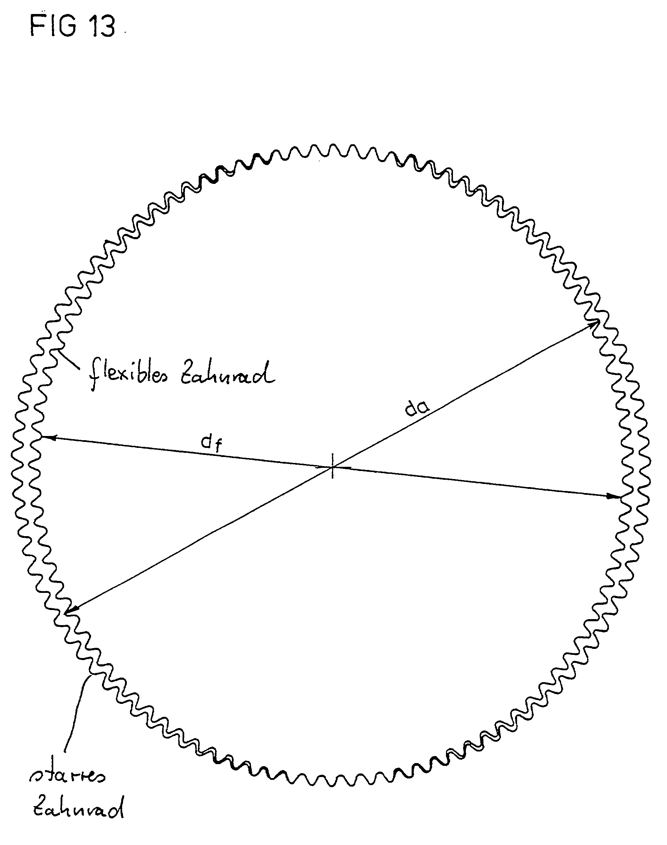

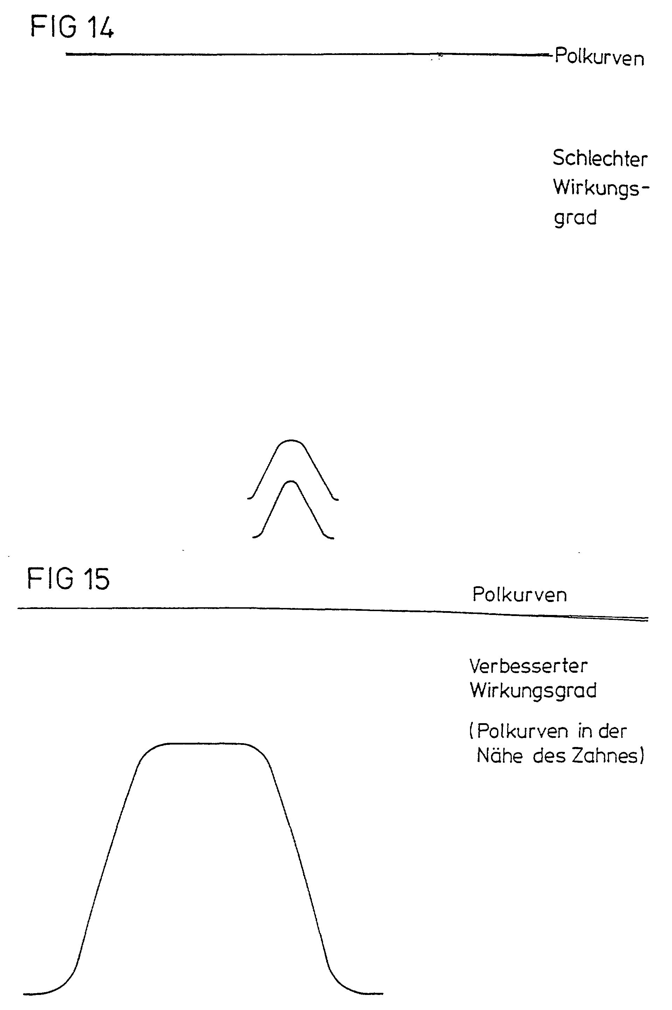

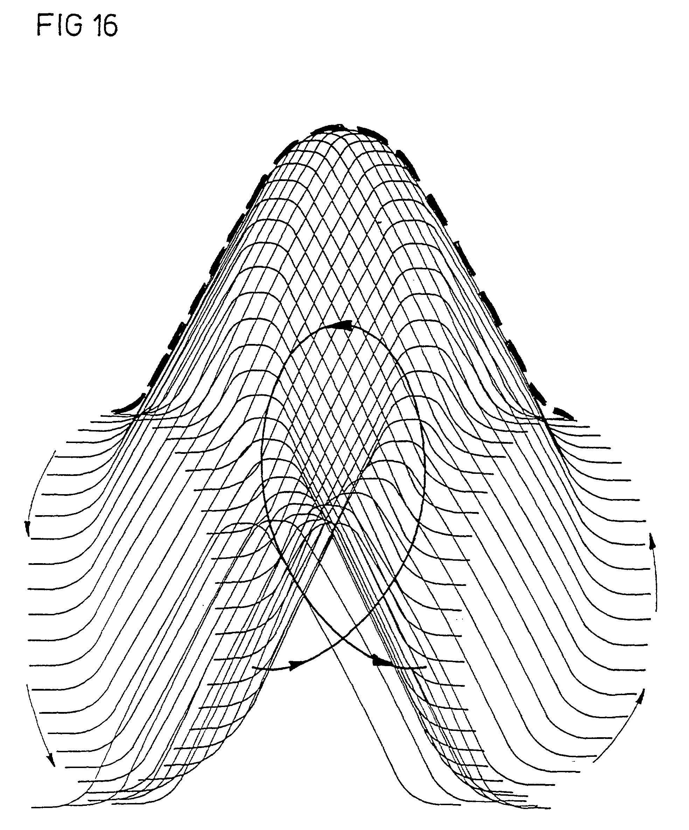

Zur Ergänzung der Erfindung wird noch auf die nachfolgenden Figuren 11 bis 16 Bezug genommen.

In Fig. 11 ist schematisch eine Schnittansicht durch ein Ausführungsbeispiel eines Untersetzungsgetriebes nach der Erfindung dargestellt. Die zugehörende Fig. 12 zeigt das zugehörende Verzahnungsblockschaltbild.

Das Untersetzungsgetriebe weist eine starren Stützring 1, der im vorliegenden Ausführungsbeispiel von Fig. 11 als Gehäuse ausbildet ist, auf. Der starre Stützring 1 verfügt über eine zylindrische, innenverzahnte und eine erste Zähnezahl Z1 aufweisende Stützfläche 3. Innerhalb des Stützringes 1 ist eine radialflexible Abrollbuchse 5 mit einer verzahnten Außenmantelfläche 7 angeordnet. Die Abrollbuchse 5 steht mit einem oder mehreren ersten Umfangsabschnitten ihrer Außenmantelfläche 7 in kämmenden Eingriff mit der Stützfläche 3 der Stützringes 1. Die Abrollbuchse 5 weist jedoch eine größere Breite auf als die Breite der Stützfläche 3. Der Antrieb und die Verformung der Abrollbuchse 5 erfolgt nach Art der bekannten und in der Beschreibungseinleitung genannten Harmonic-Drive-Getriebe, weshalb hier zum Zwecke der Offenbarung ausdrücklich auf das eingangs genannte Dokument Bezug genommen wird. Die im Zusammenhang mit den nachfolgenden Figuren noch näher erläuterten Antriebseinrichtungen 30 stehen drehfest mit der Antriebswelle 11 in Verbindung.

Die Abtriebsseite des in den Fig. 11 und 12 dargestellten Untersetzungsgetriebes ist durch ein Abtriebshohlrad 15 realisiert, das eine zylindrische, innenverzahnte und eine zweite Zähnezahl Z2 aufweisende Ringfläche 17 aufweist, die nach Maßgabe einer durch die Antriebseinrichtung 30 vorgegebenen Drehung ebenfalls in fortlaufendem Wechsel mit der Abrollbuchse 5 in kämmenden Eingriff steht. Im dargestellten Ausführungsbeispiel von Fig. 1 umgreift das Abtriebshohlrad 15 die Abrollbuchse 5 etwa bis zu deren halben axialen Länge. Das Abtriebshohlrad 15 weist eine kreisförmige Platte 16 auf, die die umlaufende Wandung des Abtriebshohlrades 15 miteinander endseitig verbindet. An diese Platte 16 ist vorzugsweise einstückig eine Abtriebswelle 13 angeformt.

Die Außendurchmesser der beiden Verzahnungsringe 5a, 5b der Abrollbuchse 5 weisen vorzugsweise einen gleichen Außendurchmesser auf. Dies ist in der perspektivischen Ansicht von Fig. 4 graphisch dargestellt. Der gleiche Außendurchmesser der beiden Verzahnungsringe 5a, 5b der Abrollbuchse 5 sorgt dafür, daß sich bei einer Verformung der Abrollbuchse 5 die Verzahnungen nicht gegenseitig behindern. Hierdurch wird ein besserer Wirkungsgrad des Getriebes erreicht. Allerdings können die Außendurchmesser der beiden Verzahnungsringe 5a, 5b auch ungleich sein.

Im dargestellten Ausführungsbeispiel von Fig. 11 ist angenommen, daß die Antriebseinrichtung 30 einen feststehend mit der Antriebswelle 11 verbundenen, ellipsenförmigen Antriebskern 41 aufweist, an welchem sich eine Vielzahl von radial sich nach außen erstreckenden, vorzugsweise gleichlangen Stegen bzw. Stößel 40 abstützen. Die Stößel 40 liegen an ihrem dem Antriebskern 41 abgewandten Ende an der Innenwandung der Abrollbuchse 5 an oder wird mit dieser einstückig verbunden und drücken bei Umdrehung der Antriebswelle 11 die Abrollbuchse 5 an zwei gegenüberliegenden Eingriffsstellen bzw. Umfangsabschnitten gegen die Verzahnungen der Stützfläche 3 bzw. der Ringfläche 17 des Abtriebshohlrades 15. Die Wirkungsweise und der Aufbau eines derartigen Untersetzungsgetriebes ist detailliert in der DE 296 14 738 U1 beschrieben, weshalb hier der Einfachheit halber darauf Bezug genommen wird.

In Weiterbildung dieses bekannten Untersetzungsgetriebes weist jedoch die Abrollbuchse 5 an ihrer Außenmantelfläche 7 nicht nur eine über die gesamte axiale Länge der Abrollbuchse 5 gleichmäßige Verzahnung auf, sondern zwei axial nebeneinander liegende Verzahnungsringe 5a, 5b mit unterschiedlicher Zähnzahl. Der erste Verzahnungsring 5a greift mit einem oder mehreren, im Ausführungsbeispiel von Fig. 1 mit zwei, Umfangsabschnitten kämmend in die Stützfläche 3 des Stützringes. Der erste Verzahnungsring 5a weist hierfür eine Zähnezahl Z3 auf.

Der zweite Verzahnungsring 5b kämmt dagegen abschnittsweise mit einem oder mit mehreren Umfangsabschnitten, aufgrund des elliptichen Antriebskerns 41 hier mit ebenfalls zwei Umfangsabschnitten, mit der Ringfläche 17 des Abtriebshohlrades 15. Der zweite Verzahnungsring 5b der Abrollbuchse 5 weist die Zähnezahl Z4 auf.

Durch die unterschiedliche Wahl der Zähnezahl Z3 und Z4 können sehr große Untersetzungsverhältnisse des Getriebes erzielt werden.

Um einen optimalen Zahneingriff der Zähne Z1 und Z3 bzw. der Zähne Z2 und Z4 sicherzustellen, sind die Zähnezahlen Z1 und Z3 jeweils ein ganzzahliges Vielfaches der Anzahl der in Eingriff gehaltenen ersten Umfangsabschnitte, also der Anzahl der stets in Eingriff gehaltenen Eingriffsstellen zwischen ersten Verzahnungsring 5a und Stützfläche 3 des Stützringes 1. Die Zähnezahlen Z2 und Z4 sind jeweils ein ganzzahliges Vielfaches der Einzahl der in Eingriff gehaltenen zweiten Umfangsabschnitte, also derjenigen Anzahl der Eingriffsstellen zwischen dem zweiten Verzahnungsring 5b und der Ringfläche 17 des Abtriebshohlrades 15.

Kämmt der Verzahnungsring 5a der Abrollbuchse 5 mit der Stützfläche 3 des Stützringes 1 an zwei Stellen und der zweite Verzahnungsring 5b der Abrollbuchse 5 mit der Ringfläche des Abtriebshohlrades 15 ebenfalls an zwei Eingriffsstellen aufgrund der gewählten Antriebseinrichtung 30, wie beispielsweise im Ausführungsbeispiel von Fig. 1, so sind die Zähnezahl Z1 und Z3 jeweils ein ganzzahliges Vielfaches der Zahl 2 und die Zähnezahl Z2 und Z4 ebenfalls ein ganzzahliges Vielfaches der Zahl 2.

Durch die gewählte Zähnezahldifferenz Z1-Z3 wird eine Relativbewegung der Abrollbuchse 5 erzeugt. Gleichzeitig wird durch den Eingriff des zweiten Verzahnungsringes 5b der Abrollbuchse 5 mit der Innenverzahnung des Abtriebshohlrades 15 die Abtriebswelle 13 angetrieben. Die Geschwindigkeit des Antriebes des Abtriebshohlrades 15 und damit der Abtriebswelle 13 hängt von der Zähnzahldifferenz Z2-Z4 ab. Durch die Zähnzahldifferenz Z2-Z4 entsteht zwischen der Abrollbuchse 5 und dem Abtriebshohlrad 15 eine Relativbewegung, wobei die Bewegung des Abtriebshohlrades 15 und damit der Abtriebswelle 13 zu der Bewegung der Abrollbuchse im Eingriff zur Stützfläche 3 des Stützringes 1 gegenläufig wirkt.

Der wesentliche Vorteil, auf der Abrollbuchse zwei Verzahnungsringe 5a, 5b mit unterschiedlichen Zähnezahl Z3 und Z4 aufzubringen, besteht darin, daß ohne Bauraum und Wirkungsgrad zu beeinträchtigen, eine deutlich größere Übersetzung möglich ist.

Die Zähnezahldifferenzen Z1-Z3 und Z2-Z4 sind vorzugsweise möglichst gleich gestaltet da hierdurch auf beide Verzahnungseingriffe die gleiche Verformung wirkt. Obwohl die Abrollbuchse 5 zweckmäßigerweise einstückig und vorzugsweise als Kunststoffspritzteil gebildet ist, kann die Abrollbuchse 5 auch aus zwei Teilen gebildet sein, die anschließend drehfest miteinander zu verbinden sind.

Die Gesamtübersetzung eines solchen Untersetzungsgetriebes berechnet sich wie folgt:

$$i = \frac{1}{1 - \frac{Z1 \cdot Z4}{Z3 \cdot Z2}}.$$

Ist die Zähnezahl Z4 kleiner als Z3, so drehen sich die Antriebswelle 11 und die Abtriebswelle 13 gleichsinnig. Ist dagegen die Zähnezahl Z4 des zweiten Verzahnungsringes 5b größer als die Zähnezahl Z3 des ersten Verzahnungsringes 5b der Abrollbuchse 5, so drehen sich die Antriebswelle 11 und die Abtriebswelle 13 gegensinnig.

Ein Übersetzungsverhältnis von i = 441 ergibt sich beispielsweise dann, wenn die Zähnzahl Z1 = 100, Z2 = 90, Z3 = 98 und Z4 = 88 gewählt ist. Ein Übersetzungsverhältnis von i = -539 ergibt sich dann, wenn man Z1 = 100 , Z2 = 110, Z3 = 98 und Z4 = 108 wählt.

Wie aus diesen Ausführungsbeispielen ersichtlich, sind die Zähnezahlen Z1 und Z3 jeweils ein ganzzahliges Vielfaches der Zahl 2 und die Zähnezahlen Z2 und Z4 ebenfalls ein ganzzahliges Vielfaches der Zahl 2. Dies rührt daher, daß bei diesen Ausführungsbeispielen davon ausgegangen wurde, daß sowohl der erste Verzahnungsring 5a mit der Stützfläche 3 des Stützringes 1 an zwei Umfangsabschnitten und der zweite Verzahnungsring 5b der Abrollbuchse ebenfalls an zwei Umfangsabschnitten an der Ringfläche 17 des Abtriebshohlrades 15 kämmt.

Die beiden Zahlenbeispiele zeigen auch, daß die Zähnezahldifferenzen Z1-Z3 und Z2-Z4 jeweils identisch gewählt sind, da hierdurch auf die kämmenden Verzahnungen vorteilhafterweise die gleiche Verformung wirkt.

Die Bezeichnungen $d_a$ und $d_f$ in Figur 13 stehen für den Außenund Fußdurchmesser des Wellgenerators und sind als solche bekannt. In Figur 14 sind die Polkurven vor einer Wirkungsgradoptimierung und in Figur 15 nach einer Wirkungsgradoptimierung gemäß vorliegender Erfindung dargestellt. Wie ersichtlich liegen bei einer Wirkungsgradoptimierung die Polkurven in der Nähe der Zähne. In Figur 16 ist der Weg eines Zahnes auf dem Wellgenerator zu verschiedenen Augenblicken dargestellt. Man erkennt deutlich die verschlungene l-förmige Bewegung des Zahns. Hierbei ist auf die Kontur links und rechts, die sich durch die Endpunkte des Fußkreises ergeben, zu achten. Die hierdurch gebildetete Einhüllende, die fett strichliert angedeutet ist, bestimmt exakt die Kontur der Zahnlücke im Hohlrad. Es fällt hierbei auf, daß die strichlierte Linie keine Kante aufweist und durchweg bogenförmige verläuft. Dadurch benötigt der Zahn mehr Platz in der Zahnlücke am Hohlrad.

**Patentansprüche**

1. Wellgetriebe mit den Merkmalen:

   a) ein starres Zahnrad (1) mit Innenverzahnung;

   b) ein innerhalb des Zahnrades (1) mit Innenverzahnung angeordnetes flexibles Zahnrad (5) mit Außenverzahnung;

   c) einen Wellgenerator (30), um das Zahnrad (5) mit Außenverzahnung in eine Querschnittsform derart zu bringen, daß das Zahnrad (5) mit Außenverzahnung lediglich partiell mit dem starren Zahnrad (1) mit Innenverzahnung kämmt und der Eingriffsabschnitt der beiden Zahnräder (1, 5) in Umfangsrichtung rotiert;

   d) durch die Rotation des Wellgenerators (30) ist eine Relativbewegung der beiden Zahnräder (1, 5) erzeugbar;

   e) das flexible Zahnrad (5) und das starre Zahnrad (1) sind jeweils Stirnzahnräder;

   f) zur Vermeidung von Eingriffsstörungen sind das Zahnprofil des starren Zahnrades (1) und das Zahnprofil des flexiblen Zahnrades (5) aufeinander abgestimmt;

   g) das Zahnprofil des flexiblen Zahnrades (5) und das Zahnprofil des starren Zahnrades (1) sind so gewählt, daß jeder Zahn des flexiblen Zahnrades (5) eine schleifenförmige Bewegungsbahn innerhalb einer Zahnlücke des Zahnprofils des starren Zahnrades (1) ausführen kann,

   **gekennzeichnet durch** das weitere Merkmal:

   f) die Kontur der Zahnlücke im starren Zahnrad (1) hat die Form der Einhüllenden der Lagen des verformten, flexiblen Zahnrades (5) beim Abwälzen auf dem starren Zahnrad (1).

2. Wellgetriebe nach Anspruch 1, **dadurch gekennzeichnet, daß** Polkurven des flexiblen Zahnrades (5) und festen Zahnrades (1) mindestens annähernd im Bereich der Zähne des flexiblen Zahnrades (5) und festen Zahnrades (1) liegen.

3. Wellgetriebe nach Anpruch 2, **dadurch gekennzeichnet, daß** die Polkurven des flexiblen Zahnrades (5) und festen Zahnrades (1) im Bereich der Zähne des flexiblen und festen Zahnrades liegen.

4. Wellgetriebe nach einem der Ansprüche 1 bis 3, **dadurch gekennzeichnet, daß** eine Zahnlücke im Zahnprofil des festen Zahnrades (1) mindestens so groß ausgebildet ist, daß ein einlaufender Zahn des flexiblen Zahnrades (5) eine schleifende Bewegung derart ausführen kann, daß dieser zunächst an der der Drehrichtung des Wellgenerators zugewandten Flanke der Zahnlücke anliegt und sich bei seiner schleifenden Bewegung anschließend entgegen der Drehrichtung des Wellgenerators zurückbewegt, um an der zur Drehrichtung des Wellgenerators abgewandten Seite Flanke der Zahnlücke anzuliegen.

5. Wellgetriebe nach einem der Ansprüche 1 bis 4, **dadurch gekennzeichnet, daß** die Richtung der schleifenförmigen Bewegung eines Zahnes des flexiblen Zahnrades (5) zur Drehrichtung des Wellgenerators entgegengesetzt ist.

6. Wellgetriebe nach einem der Ansprüche 1 bis 6, **dadurch gekennzeichnet, daß** mindestens das flexible Zahnrad aus Kunststoff gebildet ist.

7. Wellgetreibe nach einem der Ansprüche 1 bis 6, **dadurch gekennzeichnet, daß** das feste Zahnrad (1) aus Kunststoff oder Metall gebildet ist.

8. Wellgetriebe nach einem der Ansprüche 1 bis 7, **dadurch gekennzeichnet, daß** insbesondere auch der Zahnfuß der Zähne des feststehenden Zahnrades eine Kontur aufweist, welche der Bewegungskontur eines einlaufenden und eine Schleifenbewegung ausführenden Zahnes des flexiblen Zahnrades nachgebildet ist.

9. Wellgetriebe nach einem der Ansprüche 1 bis 8,

**dadurch gekennzeichnet**, das Kunststoffzahnprofil des flexiblen Zahnrades (5) mit einer mechanischen Verstärkung versehen ist.

10. Wellgetriebe nach Anspruch 9,
**dadurch gekennzeichnet, daß** die mechanische Verstärkung durch eine Oberflächenbeschichtung mit einem Material gebildet ist, welches eine höhere mechanische Stabilität als der Kunststoff des flexiblen Zahnrades (5) aufweist.

11. Wellgetriebe nach anspruch 10,
**dadurch gekennzeichnet, daß** als Oberflächenbeschichtung eine Metall- oder Keramikbeschichtung vorgesehen ist.

12. Wellgetriebe nach Anspruch 9,
**dadurch gekennzeichnet, daß** auf dem flexiblen Zahnrad (5) ein metallischer Ring aufsitzt.

13. Wellgetriebe nach einem der Ansprüche 1 bis 12,
**dadurch gekennzeichnet, daß**, bezogen auf etwa die halbe Zahnhöhe, jede Zahnlücke im festen Zahnrad (1) etwa 1,5 bis 2 breiter ist als ein Zahn des flexiblen Zahnrades (5).

14. Wellgetriebe nach einem der Ansprüche 1 bis 14,
**dadurch gekennzeichnet, daß** das flexible Zahnrad (5) durch den Wellgenerator in eine elliptische Querschnittsform bringbar ist.

15. Verfahren zur Berechnung der Zahnprofile des festen und flexiblen Zahnrades in einem Wellgetriebe nach einem der Ansprüche 1 bis 14,
**gekennzeichnet durch** folgende Schritte:

a) Vorgabe der Getriebedaten i, z1, z2, z3, z4, da1, df1, da2, df2;

b) Vorgabe der Kontur und des Hubes des Wellgenerators;

c) iteratives Festlegen der Zahnkontur des flexiblen Zahnrades (5) derart, daß dessen Polkurve mindestens annähernd im Bereich der Zähne des flexiblen Zahnrades (1) liegt;

d) Vorgabe eines Bezugsprofiles für das feste Zahnrad (1) nach Maßgabe der im Schritt c) festgelegten Zahnkontur des flexiblen Zahnrades (5);

e) iteratives, gegenseitiges Verändern des Profils des festen Zahnrades (1) und der festgelegten Zahnkontur des flexiblen Zahnrades (5) mittels eines Rechenalgorithmusses zur Erzielung einer optimierten Zahnüberdeckung,

wobei i das Übersetzungverhältnis des Getriebes ist,
z1 die Zähnezahl des flexiblen Zahnrades auf Antriebsseite
z2 die Zähnezahl des starren Hohlrades auf der Antriebsseite
z3 die Zähnezahl des flexiblen Zahnrades auf Abtriebsseite
z4 die Zähnezahl des Abtriebes
da1 Außendurchmesser des Wellgenerators (=Abrollbuchse) auf Antriebsseite
df1 Fußdurchmesser des Wellgenerators (=Abrollbuchse) auf Antriebsseite
da2 Außendurchmesser des Wellgenerators (=Abrollbuchse) auf Abntriebsseite
df2 Fußdurchmesser des Wellgenerators (=Abrollbuchse) auf Abtriebsseite.

**Claims**

1. Harmonic drive, having the following features:

a) a rigid gear (1) with an inner toothing;

b) a flexible gear (5) with an outer toothing, said flexible gear being arranged within the gear (1) with an inner toothing;

c) a wave generator (30) for bringing the gear (5) with outer toothing into a cross-sectional shape such that the gear (5) with outer toothing is meshing only partially with the rigid gear (1) with inner toothing and the engaged section of the two gears (1, 5) rotates in the circumferential direction;

d) a relative movement of the two gears (1, 5) can be produced by the rotation of the wave generator (30);

e) the flexible gear (5) and the rigid gear (1) are in each case rim gears;

f) in order to avoid engagement obstructions, the tooth profile of the rigid gear (1) and the tooth profile of the flexible gear (5) are adapted to one another;

g) the tooth profile of the flexible gear (5) and the tooth profile of the rigid gear (1) are selected such that each tooth of the flexible gear (5) can make a loop-shaped movement within a tooth gap of the tooth profile of the rigid gear (1),
**characterized by** the further feature:

h) the contour of the tooth gap in the rigid gear (1) has the shape of the enveloping ends of the positions of the deformed flexible gear (5) while rolling upon the rigid gear (1).

2. Harmonic drive according to Claim 1, **characterized in that** polar curves of the flexible gear (5) and rigid gear (1) lie at least approximately in the region of the teeth of the flexible gear (5) and rigid gear (1).

3. Harmonic drive according to Claim 2, **characterized in that** the polar curves of the flexible gear (5) and rigid gear (1) lie in the region of the teeth of the flexible and rigid gear.

4. Harmonic drive according to one of Claims 1 to 3, **characterized in that** a tooth gap in the tooth profile of the rigid gear (1) is at least large enough that an entering tooth of the flexible gear (5) can make a loop-shaped movement such that the latter first bears against the flank of the tooth gap which is facing the direction of rotation of the wave generator and, while making its loop-shaped movement, moves counter to the direction of rotation of the wave generator, in order to bear against the flank of the tooth gap which is facing away from the direction of rotation of the wave generator.

5. Harmonic drive according to one of Claims 1 to 4, **characterized in that** the direction of the loop-shaped movement of a tooth of the flexible gear (5) is opposed to the direction of rotation of the wave generator.

6. Harmonic drive according to one of Claims 1 to 5, **characterized in that** at least the flexible gear (5) is formed of plastic.

7. Harmonic drive according to one of Claims 1 to 6, **characterized in that** the rigid gear (1) is formed of plastic or metal.

8. Harmonic drive according to one of Claims 1 to 7, **characterized in that** in particular also the feet of the teeth of the rigid gear (1) have a contour which corresponds to the movement contour of a tooth of the flexible gear which enters and makes a loop-shaped movement.

9. Harmonic drive according to one of Claims 1 to 8, **characterized in that** the plastic tooth profile of the flexible gear (5) is provided with a mechanical reinforcement.

10. Harmonic drive according to Claim 9, **characterized in that** the mechanical reinforcement is formed by a surface coating comprising a material which has a higher mechanical stability than the plastic of the flexible gear (5).

11. Harmonic drive according to Claim 10, **characterized in that** a metal or ceramic coating is provided as surface coating.

12. Harmonic drive according to Claim 9, **characterized in that** a metal ring is seated upon the flexible gear (5).

13. Harmonic drive according to one of Claims 1 to 12, **characterized in that**, measured at approximately half the tooth height, each tooth gap in the rigid gear (1) is approximately 1.5 to 2 times broader than a tooth of the flexible gear (5).

14. Harmonic drive according to one of Claims 1 to 13, **characterized in that** the flexible gear (5) can be brought into an elliptical cross-sectional shape by the wave generator.

15. Method for calculating the tooth profiles of the rigid and flexible gears in a harmonic drive according to one of Claims 1 to 14, **characterized by** the following steps:

a) predetermination of the gear unit data i, z1, z2, z3, z4, da1, df1, da2, df2;

b) predetermination of the contour and the stroke of the wave generator;

c) iterative determination of the tooth contour of the flexible gear (5) such that its polar curve lies at least approximately in the region of the teeth of the flexible gear (5);

d) predetermination of a reference profile for the rigid gear (1) according to the measurements of the tooth contour of the flexible gear (5) as determined in step c);

e) iterative, reciprocal modification of the profile of the rigid gear (1) and the previously determined tooth contour of the flexible gear (5) by means of a computer algorithm in order to arrive at an optimized tooth coverage or overlap,

wherein i is the transmission ratio of the gear unit, z1 is the tooth count of the flexible gear on the drive side,
z2 is the tooth count of the rigid internally geared gear on the drive side,
z3 is the tooth count of the flexible gear on the driven side,
z4 is the tooth count of the output or driven side,
da1 is the outer diameter of the wave generator (=roller bushing) on the drive side,
df1 is the foot diameter of the wave generator (=roller bushing) on the drive side,

da2 is the outer diameter of the wave generator (=roller bushing) on the output or driven side,
df2 is the foot diameter of the wave generator (=roller bushing) on the output or driven side.

**Revendications**

1. Engrenage ondulatoire comprenant les caractéristiques suivantes :

    a) une roue dentée rigide (1) à denture intérieure ;
    b) une roue dentée flexible (5) à denture extérieure disposée à l'intérieur de la roue dentée (1) à denture intérieure ;
    c) un générateur d'ondes (30) pour amener la roue dentée (5) à denture extérieure dans une forme de section transversale de telle sorte que la roue dentée (5) à denture extérieure ne s'engrène que partiellement dans la roue dentée rigide (1) à denture intérieure et que le segment d'engrenage des deux roues dentées (1, 5) soit rotatif dans la direction périphérique ;
    d) la rotation du générateur d'ondes (30) peut générer un mouvement relatif des deux roues dentées (1, 5) ;
    e) la roue dentée flexible (5) et la roue dentée rigide (1) sont respectivement des roues dentées droites ;
    f) pour éviter des interférences d'engrènement les profils dentés de la roue dentée rigide (1) et de la roue dentée flexible (5) sont accordés l'un sur l'autre ;
    g) le profil denté de la roue dentée flexible (5) et le profil denté de la roue dentée rigide (1) sont choisis afin que chaque dent de la roue dentée flexible (5) puisse exécuter une course en boucle à l'intérieur d'un entredent du profil denté de la roue dentée rigide (1),
    **caractérisé en ce que**
    h) le contour de l'entredent dans la roue dentée rigide (1) présente la forme de l'enveloppante des positions de la roue dentée flexible (5) déformée lors du roulement sur la roue dentée rigide (1).

2. Engrenage ondulatoire selon la revendication 1,
**caractérisé en ce que**
des courbes polaires de la roule dentée flexible (5) et de la roue dentée rigide (1) se situent du moins approximativement dans la zone des dents de la roue dentée flexible (5) et de la roue dentée rigide (1).

3. Engrenage ondulatoire selon la revendication 2,
**caractérisé en ce que**
les courbes polaires de la roue dentée flexible (5) et de la roue dentée rigide (1) se situent dans la zone des dents des roues dentées flexible et rigide.

4. Engrenage ondulatoire selon l'une quelconque des revendications 1 à 3,
**caractérisé en ce qu'**
un entredent dans le profil dentée de la roue dentée rigide (1) est au moins suffisamment grand pour qu'une dent entrante de la roue dentée flexible (5) puisse effectuer un mouvement en boucle de manière à ce que celle-ci s'applique d'abord contre le flanc de l'entredent situé en regard du sens de rotation du générateur d'ondes puis, lors de son mouvement en boucle, retourne à l'opposé du sens de rotation du générateur d'ondes pour s'appliquer contre le flanc de l'entredent opposé au sens de rotation du générateur d'ondes.

5. Engrenage ondulatoire selon l'une quelconque des revendications 1 à 4,
**caractérisé en ce que**
la direction du mouvement en boucle d'une dent de la roue dentée flexible (5) est opposée au sens de rotation du générateur d'ondes.

6. Engrenage ondulatoire selon l'une quelconque des revendications 1 à 6,
**caractérisé en ce qu'**
au moins la roue dentée flexible (5) est fabriquée en matière plastique.

7. Engrenage ondulatoire selon l'une quelconque des revendications 1 à 6,
**caractérisé en ce que**
la roue dentée rigide (1) est fabriquée en matière plastique ou en métal.

8. Engrenage ondulatoire selon l'une quelconque des revendications 1 à 7,
**caractérisé en ce qu'**
en particulier le pied de dent des dents de la roue dentée rigide (1) présente également un contour imitant le contour de mouvement d'une dent entrante et exécutant un mouvement en boucle de la roue dentée flexible (5).

9. Engrenage ondulatoire selon l'une quelconque des revendications 1 à 8,
**caractérisé en ce que**
le profil denté en matière plastique de la roue dentée flexible (5) est muni d'un renforcement mécanique.

10. Engrenage ondulatoire selon la revendication 9,
**caractérisé en ce que**
le renforcement mécanique est formé par un revêtement de surface avec un matériau qui présente une stabilité mécanique plus importante que la matière plastique de la roue dentée flexible (5).

**11.** Engrenage ondulatoire selon la revendication 10, **caractérisé en ce que** le revêtement de surface est un revêtement en métal ou en céramique.

**12.** Engrenage ondulatoire selon la revendication 9, **caractérisé en ce qu'** une bague métallique est placée sur la roue dentée flexible (5).

**13.** Engrenage ondulatoire selon l'une quelconque des revendications 1 à 12, **caractérisé en ce que** par rapport à approximativement la moitié de la hauteur des dents chaque entredent dans la roue dentée rigide (1) est de 1,5 à 2 fois plus large qu'une dent de la roue dentée flexible (5).

**14.** Engrenage ondulatoire selon l'une quelconque des revendications 1 à 13, **caractérisé en ce que** le générateur d'ondes peut conférer à la roue dentée (5) flexible une forme de section transversale elliptique.

**15.** Procédé pour calculer les profils de dents des roues dentées rigide et flexible dans un engrenage ondulatoire selon l'une quelconque des revendications 1 à 14, **caractérisé par** les étapes suivantes :

   a) définition des données de l'engrenage $i$, $z_1$, $z_2$, $z_3$, $z_4$, $da_1$, $df_1$, $da_2$, $df_2$ ;
   b) définition du contour et de la course du générateur d'ondes ;
   c) fixation itérative du contour de dents de la roue dentée flexible (5) pour que la courbe polaire de celle-ci se trouve du moins approximativement dans la zone des dents de la roue dentée (1) rigide ;
   d) définition d'un profil de référence pour la roue dentée rigide (1) en fonction du contour de dents de la roue dentée flexible (5) fixé à l'étape c) ;
   e) variation réciproque itérative du profil de la roue dentée rigide (1) et du contour de dents fixé de la roue dentée flexible (5) au moyen d'un algorithme de calcul pour obtenir une coïncidence de dents optimisée, avec

   $i =$ le rapport de transmission de l'engrenage,
   $z_1 =$ nombre de dents de la roue dentée flexible côté entraînement,
   $z_2 =$ nombre de dents de la roue creuse rigide côté entraînement,
$z_3 =$ nombre de dents de la roue dentée flexible côté sortie,
$z_4 =$ nombre de dents côté sortie,
$da_1 =$ diamètre extérieur du générateur d'ondes (=douille de déroulement) côté entraînement,
$df_1 =$ diamètre de pied du générateur d'ondes (=douille de déroulement) côté entraînement,
$da_2 =$ le diamètre extérieur du générateur d'ondes (=douille de déroulement) côté sortie ;
$df_2 =$ le diamètre de pied du générateur d'ondes (=douille de déroulement) côté sortie.

## FIG 1      Leitkurve

Leitkurve unter
Last ≠ Ellipse

Leitkurve unter Last

## FIG 6

### Beschreibung der Zahnbewegungen

ohne Zusatzdrehung

mit Zusatzdrehung

# FIG 2     Eingriffsstörungen

Lastfrei i. O.

Eingriffsstörungen
durch Verformung
des Zahnringes

Eingriffsstörungen
durch Strecken
des Zahnringes

Lastfrei

unter Last

# FIG 3

Nur Zahnkopf berechnen

$i$

$\varphi$ Antriebsdrehwinkel

Gesamter Zahn

$i$

$\varphi$

# FIG 4

Polkurve außerhalb des
Zahnes → schlechter
Wirkungsgrad

Polkurve innerhalb des
Zahnes → guter
Wirkungsgrad

—————————Polkurve

———— Zahn

## FIG 5

Getriebdaten:
i, z1, z2, z3, z4
da1, df1, da2........
Kontur Wellgenerator Hub

Polkurven/ Polflächen Lage

Abroll-buchse

da

df

Zahn

Lage in Ordnung

Ja          Nein

Bezugsprofile der Abrollbuchse (Zahnstangen zahn)

Zahnradprofile der Abrollbuchsen

da

df

Zahnradprofile der Hohlradverzahnungen

Profile, Festigkeit i.O. Nein

Wirkungsgrad optimieren durch Polkurven / Pol-flächen Lage

Zahnprofile (Kopf, Flanke, Fuß) optimieren auf Überdeckung, Festigkeit, Un-empfindlichkeit

FIG 7    Leitkurve durch FEM oder BEM

Leitkurve

$x(u)$

FIG 9

Die Koordinatensysteme

FIG 10

$s(u)$

$\varphi(u)$

$x(u)$

# FIG 8     Verformungsmodell

## a) Ketten-Modell

## b) Bernoulli-Modell

Leitkurve

unverformt → verformt

Zahn

x, λ, p, p(s), y, x

J, λ, q, q(s)

EP 0 978 667 B1

FIG 11

FIG 12

FIG 13

flexibles Zahnrad

$d_a$

$d_f$

starres
Zahnrad

# FIG 14

Polkurven

Schlechter
Wirkungsgrad

# FIG 15

Polkurven

Verbesserter
Wirkungsgrad

(Polkurven in der
Nähe des Zahnes)

FIG 16